# EUROPEAN PATENT APPLICATION

(11) **EP 4 745 996 A1**
(43) Date of publication of application: **20.05.2026**
(21) Application number: 24213345.2
(22) Date of filing: 15.11.2024
(51) Int. Cl.: G21D 3/00

(54) **METHOD AND SYSTEM FOR OPTIMIZING CORE LOADING PATTERN**

(71) Applicant: Westinghouse Electric Sweden AB, 721 63 Västerås (SE)
(72) Inventor: HAMMARSTRÖM, Johan, 72597 Västerås (SE); JENSEN-TORNEHED, Jonas, 72245 Västerås (SE); CALL, Mikael, 58729 Linköping (SE); ALGERS, Björn, 27593 Sjöbo (SE); TOREHEIM, Ebba, 21158 Malmö (SE)
(74) Representative: Bjerkén Hynell KB

(57) **Abstract**

The present application relates to a method of optimizing a nuclear core loading pattern, comprising the following steps of training a model with results of a large number of core loading simulations, where each core loading simulation comprises a unique core loading pattern of fuel assemblies, to predict key measures for each unique loading pattern, so that the training results in the predictions of the model generally corresponding to the simulations, running the trained model with key measures in order to provide feasible results, and optimizing the loading pattern with the results of the trained model.

## Description

### TECHNICAL AREA

The present application pertains to a method for designing nuclear core loading patterns and in particular for optimizing the patterns.

### BACKGROUND OF INVENTION

Loading of a nuclear core is a very important task where different aspects have to be taken into account regarding meeting all safety criteria, energy output, lifespan of the nuclear core as well as other aspects and constraints.

A nuclear core contains many fuel assemblies. These assemblies have different multiplying properties because they may have different enrichment and different burnup. Generally, a common fuel assembly contains energy for a number of years of operation at full power. Once loaded, the fuel stays in the core. During this period, the reactor core has to be refuelled. During refuelling, some of the fuel is removed to a spent fuel pool. At the same time, the remainder is rearranged to a location in the core better suited to its remaining level of enrichment. The removed fuel has to be replaced by fresh fuel assemblies.

Thus, partially depleted fuel assemblies are reused, along with fresh fuel assemblies. Partially depleted fuel has lower reactivity than fresh fuel, which provides several possibilities when designing the new arrangement of the fuel assemblies in the core positions. The reload is designed by allocating fuel assemblies with different reactivity in such a way as to use the fuel efficient while maintaining desirable power density distributions and meeting all safety limits.

Designing new arrangements of fuel assemblies is a work-intensive task and involves a high degree of knowledge and experience from the design personnel. In order to increase the efficiency and to reduce the time when designing new arrangements, different software core simulators have been developed. These core simulators use a very large number of input parameters as base for the simulations and they require a vast amount of computer power for running these simulations. Even so, each run is time consuming and considering the vast number of possible core loading patterns, the actual number of simulator runs are necessarily restricted, wherein only a small fraction of the "space" of possible core loading patterns are evaluated.

There is thus a need for improvements regarding optimizing core loading patterns and the possibility of exploring and finding a larger number of core loading patterns that are feasible while limiting the time and effort needed for finding the most suitable core loading pattern for the actual setup of a core.

### BRIEF DESCRIPTION OF INVENTION

The aim of the present application is to remedy the drawbacks of the state of the art solutions regarding core loading pattern optimization. This aim is solved by the features of the independent patent claim. Preferable solutions form the subject of the dependent patent claims.

According to a main aspect of the application, a method of optimizing a nuclear core loading pattern is provided. The method may comprise the steps of training a model with results of a large number of core loading simulations, where each core loading simulation comprises a unique core loading pattern of fuel assemblies, to predict key measures for each unique core loading pattern, so that the training results in the predictions of the model generally corresponding to the simulations, running the trained model with key measures in order to provide feasible results, and optimizing the loading pattern with the results of the trained model.

The advantage compared to todays simulators is that a very large number of different core loading patterns may be tested in much shorter time by using the trained model. This is largely due to that the model first is trained on certain important key features, i.e. characteristics of fuel assemblies that affects the key output metrics the most, and possibly also operational parameters such as power level, coolant flow, control rod positions etc., and then that the trained model evaluates different core loading patterns based on these key features. The training of the model to predict key metrics that generally correspond to the simulations allows for the use of a limited number of input parameters to the trained model in relation to the simulations with a good result from the trained model and thus a much faster process. The prediction may be made for a whole cycle for a core loading pattern at the beginning of the cycle.

According to one aspect, optimization may be performed manually by an operator with the trained model. In addition, optimization is performed automatically by an optimization software.

According to further aspect, the method may comprise the step of setting pre-selected parameters that affect the optimization. These may be limits, boundaries and other limitations.

According to another aspect, the method may comprise the step of verifying the results provided by the trained model by subsequent simulation of the results. In this way, it is ascertained that the results from the trained model with the predicted key measures and thus much fewer input parameters, generally correspond to the results from the simulator using much more input parameters.

The present application also provides a computer platform comprising program instructions which, when the program is executed by the computer platform, causes the computer platform to carry out the method. Moreover, a computer-readable storage medium is provided, comprising program instructions which, when executed by a computer platform, cause the computer platform to carry out the method.

These and other aspects of, and advantages with, the present invention will become apparent from the following detailed description of the invention and from the accompanying drawings.

### BRIEF DESCRIPTION OF DRAWINGS

In the following detailed description of the invention, reference will be made to the accompanying drawings, of which
- Fig. 1: is a schematic side view of a fuel assembly,
- Fig. 2: is a schematic top view of a core loading pattern,
- Fig. 3: is a flow chart comprising method steps, and.
- Fig. 4: is a computer system on which the method may be performed.

### DETAILED DESCRIPTION OF THE INVENTION

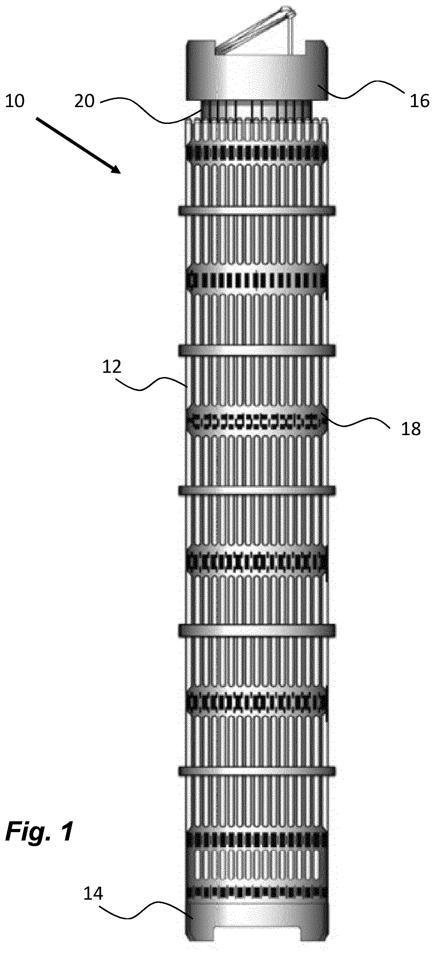

Fig. 1 schematically shows a side view of a fuel assembly 10 of a nuclear fuel reactor as a non-limiting example that may utilize the method of optimizing core loading patterns. The fuel assembly 10 comprises a number of fuel rods 12 and guide tubes 20. A lower bottom nozzle 14 is arranged below the fuel rods 12. A lower end of the guide tubes 20 is attached to the bottom nozzle 14. Above the fuel rods 12 top nozzle 16 is arranged. The top nozzle 16 has a design for gripping and lifting a fuel assembly.

The fuel assembly 10 comprises a number of spacer grids 18 which hold the fuel rods 12. The whole bundle of fuel rods 10 is thus held together with the help of the guide tubes 20, lower bottom nozzle 14, top nozzle 16 and spacer grids 18. It should be noted that Fig. 1 schematically shows a shortened fuel assembly with reduced number of spacer grids 18. Several auxiliary equipment are also comprised in the reactor, such as steam generators, turbines connected to electricity generators, pumps, filters, etc., which are standard in a nuclear reactor and do not form a part of the invention and will thus not be described in more detail.

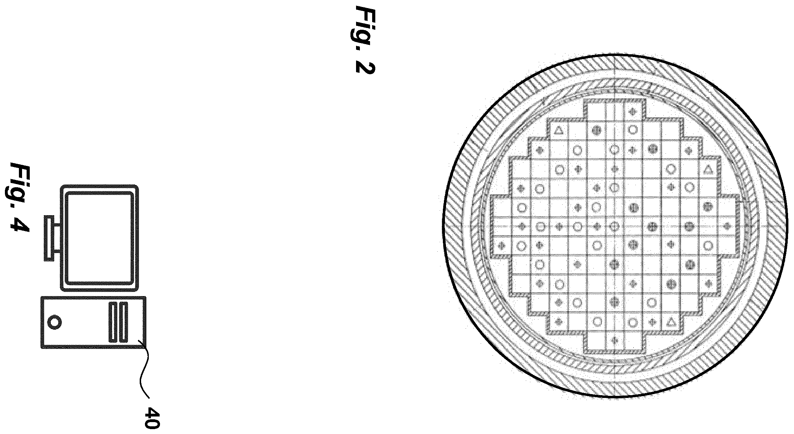

The core comprises a plurality of nuclear fuel assemblies mentioned above, extending in an axial, vertical, direction. The nuclear fuel assemblies are in the core bundled together side by side and form a pattern as seen from above, as an example in Fig. 2, wherein the distribution of the nuclear fuel assemblies form a core loading pattern. Each fuel assembly is individually identified and each position of the individual fuel assemblies is also identified. Moreover, each fuel assembly comprises either unused material or already irradiated material, wherein the loading pattern defines a configuration of new and irradiated fuel assemblies.

Depending on operational prerequisites such as safety limits, other boundary conditions and energy requirements of the nuclear reactor, certain loading patterns are using the fuel more efficient and therefore more favourable than other. Because the design work of improving and finding loading patterns that are suitable is very time-consuming, even with the help of core simulation software, the present method has been developed. The method can be used for different types of reactors such as pressurized water reactors (PWR), boiling water reactors (BWR) and water water power reactor (VVER).

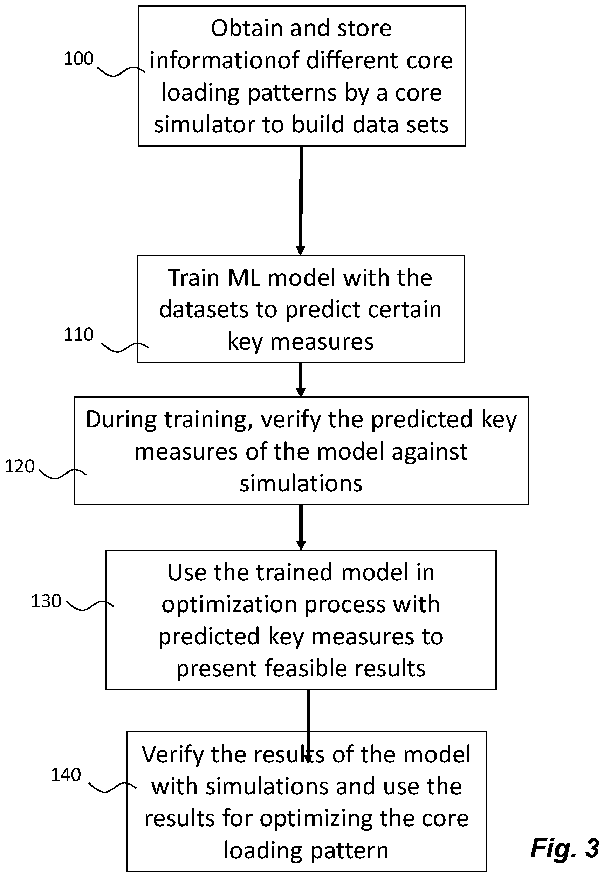

A first step 100 of the method, Fig. 3, is to obtain and store information of different core loading patterns. A core simulator is then used to create a vast number of simulator runs for different loading pattern. The simulators utilize a large number of input parameters as base for the simulations. These simulator runs are stored and used to build a training dataset. The core simulator used is specific for the type of reactor that is to be loaded with a core. There are a number of core simulators on the market that work very well and the person skilled in the art has knowledge of these, whereby no detailed description of these core simulators is included in the description.

The next step, 110, is then to use a machine learning (ML) model that is trained on the data set. The ML model is specifically trained to predict certain key measures, where the key measures depend on the reactor type. Just as an example, key factors for a PWR can include Nuclear enthalpy rise factor (F_{ΔH}), Maximum Rod Average Burnup, Boron concentration, to mention a few. It is to be understood that other factors may be included or utilized depending on the type of reactor as well as other factors.

During the training of the ML model, verification against the simulations is performed, 120, regarding the key measures in order to increase the prediction of the model, i.e. to have the predicted key measure curves of the model to be as close as possible to the corresponding curves of the simulations. Ideally, the predicted curves and the curves of the simulations are exactly the same, but this ideal state may be difficult to reach since the simulations use many more input parameters than the key parameters that the model is trained on.

In the next step, 130, the trained model is used during an optimization process. An operator can then try out different core loading patterns based on for instance certain desired performance of the core during operation as well as based on certain constraints or limits that need to be fulfilled or not exceeded. The trained model can then very rapidly, much more rapidly than the simulation runs, present results of core loading patterns with predicted key measures, which are used in the optimizing process, 140. It is thus much less time-consuming for an operator to try a large number of core patterns and be presented with predicted key measures. When the trained model has presented some feasible and favourable core loading patterns, these may then be tried in the simulators for verifying that the predicted key features correspond to the "true" values of the simulator run. Thus, the number of core loading patterns that are run in the simulators is much more limited, even though a large space of possible core loading patterns has been evaluated before by the trained model.

In addition to an operator using the trained model for trying different core loading patterns, the method can utilize an automated function wherein the model is presented with certain data regarding constraints, limits and other features affecting the core loading pattern. The trained model then performs much of the work of the operator in trying different core loading patterns, and then presents a number of possible core loading patterns with the predicted key features based on these constraints and limits. As before, these limited number of presented core loading patterns are then run in the simulator for verification.

For the present application, a computer platform or computer setup 40 is provided for the training of the model as well as for running the trained model. The computer platform may constitute any suitable computer that can execute the method described, which may be implemented by programmed instructions, typically constituted by one or several computer programs. The computer may take the form of substantially any suitable type of hardware or hardware/firmware device implemented using processing circuity such as, but not limited to, a processor, Central Processing Unit (CPU), a controller, an arithmetic logic unit (ALU), a digital signal processor, an Application Specific Integrated Circuit (ASIC), a circuit for digital signal processing (digital signal processor, DSP), a microcomputer, a field programmable gate array (FPGA), a System-on-Chip (SoC), a programmable logic unit, a microprocessor, an application-specific integrated circuit, or any other device capable of electronically performing operations in a defined manner, or other processing logic that may interpret and execute instructions. The herein utilised expression "computer" may represent a processing circuitry comprising a plurality of processing circuits, such as, e.g., any, some or all of the ones mentioned above. The computer is further provided with a display or monitor provided with a graphics circuitry.

Further, the computer may be connected to a memory unit, which may provide the computer with, for example, stored program code and/or stored data which the computer may need to enable it to execute the method. The computer may also be adapted to store partial or final results of the method in the memory unit. The memory unit may comprise a physical device utilised to store data or programs, i.e., sequences of instructions, on a temporary or permanent basis. According to some embodiments, the memory unit may comprise integrated circuits comprising silicon-based transistors. The memory unit may comprise e.g. a memory card, a flash memory, a USB memory, a hard disc, or another similar volatile or non-volatile storage unit for storing data such as e.g. ROM (Read-Only Memory), PROM (Programmable Read-Only Memory), EPROM (Erasable PROM), EEPROM (Electrically Erasable PROM), etc. in different embodiments.

The software is preferably provided with a user interface that for instance can display a core loading pattern, or at least a quadrant of a core loading pattern, with detailed information regarding each fuel assembly. Further, key feature curves are also displayed, and in this regard, predicted key feature curves from the trained model can be displayed together with the corresponding key feature curves from the simulations. It is thereby very easy to verify the accuracy of the predicted curves of the trained model. The interface may further comprise means for inputting restraints, boundaries, limits, etc., in particular if the trained model is to perform an automatic optimization.

It is to be understood that the embodiment described above and shown in the drawings is to be regarded only as non-limiting examples that can be modified in many ways within the scope of the patent claims.

## Claims

1. Method of optimizing a nuclear core loading pattern, comprising the following steps of:
- training a model with results of a large number of core loading simulations, where each core loading simulation comprises a unique core loading pattern of fuel assemblies, to predict key measures for each unique loading pattern, so that the training results in the predictions of the model generally corresponding to the simulations,
- running the trained model with key measures in order to provide feasible results, and
optimizing the loading pattern with the results of the trained model.

2. Method according to claim 1, wherein the prediction is made for a whole cycle for a core loading pattern at the beginning of the cycle.

3. Method according to any of the preceding claims, wherein optimization is performed manually with the trained model.

4. Method according to claims 1 - 2, wherein optimization is performed automatically by an optimization software.

5. Method according to any of the preceding claims, comprising the step of setting pre-selected parameters that affect the optimization.

6. Method according to any of the preceding claims, comprising the step of verifying the results provided by the trained model by subsequent simulation of the results.

7. A computer platform comprising program instructions which, when the program is executed by the computer platform, causes the computer platform to carry out the method according to claims 1 - 6.

8. A computer-readable storage medium comprising program instructions which, when executed by a computer platform, cause the computer platform to carry out the method according to claims 1 - 6.
